# EUROPEAN PATENT APPLICATION

(11) **EP 2 060 822 A1**
(43) Date of publication of application: **20.05.2009**
(21) Application number: 07425731.2
(22) Date of filing: 19.11.2007
(51) Int. Cl.: F16D 65/12

(54) **Self-ventilated brake disc**

(71) Applicant: Technobike s.r.l., 22070 Lurago Marinone CO (IT)
(72) Inventor: Mariani, Pietro, 27100 Pavia PV (IT)
(74) Representative: Concone, Emanuele

(57) **Abstract**

A brake disc consists of a circular rim having an internal profile (1) contoured for mounting on a wheel hub and a plurality of through holes (2) whose axis forms with the disc plane an angle smaller than 90° and greater than 0°, preferably ranging from 25° to 65°, and said holes (2) have a substantially conical longitudinal section with a conicity angle ranging from 1° to 30°. The axis of the holes (2) is oriented in a direction substantially tangential to the disc with the direction of inclination of the holes (2) along the disc alternated so that on each side of the disc the number of holes (2) passing over the relevant brake pad at an acute angle and those passing at an obtuse angle is the same, and also the conical shape of the holes (2) is alternated so that on each side of the disc the number of holes (2) showing the end of maximum diameter and those showing the end of minimum diameter is the same. In this way there are achieved advantages of greater dissipation surface, a constant air flow through the holes (2) favoured by the Venturi effect that their conical shape generates, and a greater braking power.

## Description

The present invention relates to discs used in disc brakes mounted on motor vehicles, typically motorcycles and cars, and in particular to a self-ventilated disc provided with cooling holes having an inclined axis and a substantially conical section.

It is known that the efficacy of a disc brake is seriously jeopardized by disc overheating, that can cause a deterioration of the disc itself. For this reason, many arrangements have been devised to increase, while leaving the diameter unchanged, the disc surface through which the heat can be dissipated by radiation or convection.

A first arrangement, adopted especially on high-performance cars, is that of a double disc consisting of two thin parallel discs joined, usually by welding, through short pins perpendicular to the planes of the two discs. In this way there are formed a plurality or radial cooling channels in which air tends to flow thanks to the centrifugal effect due to the disc rotation. These radial channels are possibly put into communication with the side faces through axial holes, i.e. holes with their axis orthogonal to the disc plane. Examples of said type of disc are disclosed in patents FR 2.678.694 and FR 2.700.373.

However, this type of structure has significant drawbacks in terms of weight and axial size, as well as high manufacturing cost due to its complexity. Moreover, there is the risk of lack of uniformity in the mechanical resistance of the disc due to the localized heating that occurs during welding.

A much simpler and cheaper arrangement consists of a single disc in which a plurality of axial through holes are formed, usually by punching. In this way, cost and size of the disc are reduced but also its efficacy. In fact the cooling surface formed in the disc body is equal only to S=n*π*d*h, where "n" is the number of holes, "h" is the disc thickness, and "d" is the diameter of the holes (assuming all of them are equal). Furthermore, since the hole axis is at 90° with respect to the disc plane which is also the plane of rotation, there is no air flow through the hole either caused by the centrifugal effect or by the relative wind that hits the moving disc.

Therefore the object of the present invention is to provide a brake disc which overcomes the limitations of known discs. This object is achieved by means of a brake disc in which the axis of said holes forms an angle preferably ranging from 25° to 65° with respect to the disc plane and the holes have a diameter that changes along their axis since their longitudinal section is substantially conical.

A first essential advantage of the brake disc according to the present invention is that of having a greater cooling surface with respect to a conventional single disc for the same number and size of holes, yet maintaining reduced cost and size. This obviously results in a greater braking efficacy and a higher resistance to heavy use.

A second notable advantage of the present disc stems from the air flow being set up through the holes which, thanks to their conical shape and therefore to the Venturi effect, reaches a high exit speed with the double result of increasing the heat removal by convection and achieving a hole cleaning effect. In this way, also the brake noisiness is reduced thanks to the removal of the dust, coming both from the braking pads and the atmosphere, that causes the typical "squeals".

A third significant advantage is the reduction in volume and therefore in weight of the disc, and consequently of the wheel on which it is mounted, while leaving the size unchanged. This results in two important achievements, namely a notable improvement in the efficacy of the suspension as well as in the handling and driveability of the vehicle thanks to the reduction of the gyroscopic effect.

For example, taking into consideration a disc having a 320 mm diameter and a 5 mm thickness, the reduction in mass with respect to a solid disc is respectively of about:
- 8,3% for a disc with axial holes 6 mm in diameter;
- 11,7% for a disc with axial holes 6 mm in diameter and inclined at 45°; and
- 18% for a disc with axial holes 6 mm in minimum diameter, inclined at 45° and with a conicity of 12°.

Still another advantage of the particular conformation of the present disc stems from the acute angle incidence at which the hole passes over the pad, with a tendency to a greater removal of the consumable material of the latter. This produces an increase in braking power at the same pressure of the pads on the disc, i.e. a faster dissipation of the kinetic energy of the vehicle.

These and other advantages and characteristics of the brake disc according to the present invention will be clear to those skilled in the art from the following detailed description of an embodiment thereof, with reference to the annexed drawings wherein:
Fig.1 is a right side view of a brake disc according to the invention;
Fig.2 is a sectional view of said disc along line II-II of Fig.1;
Fig.3 is a left side view of said brake disc; and
Fig.4 is a sectional view of said disc along line IV-IV of Fig.3.

With reference to said figures, there is seen that a brake disc according to the present invention has a conventional circular rim shape with a contoured internal profile 1, for the mounting on a wheel hub, and a plurality of through holes 2.

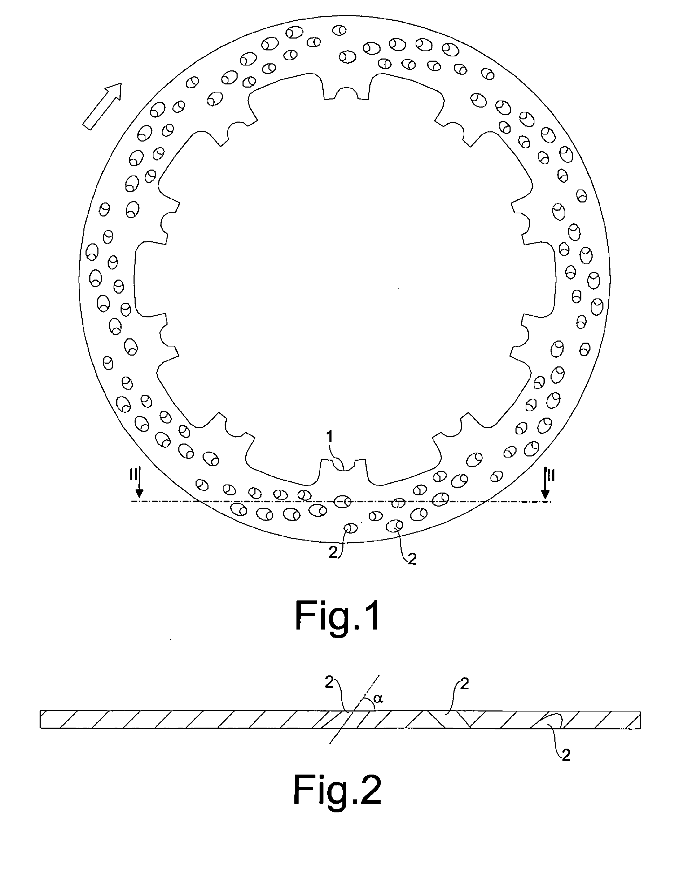

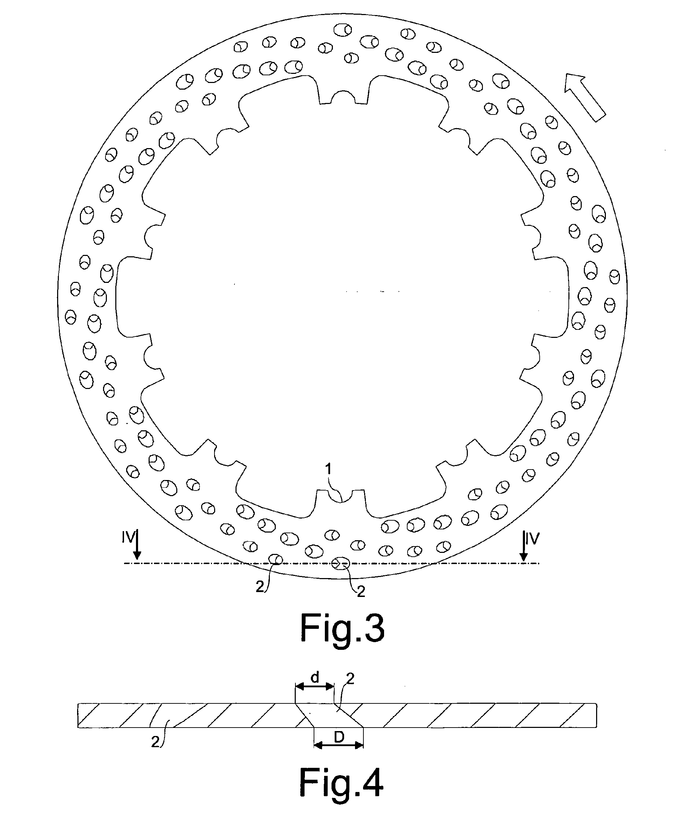

The novel aspect of said disc resides in the fact that holes 2 are neither axial nor radial, i.e. their axis forms with the disc plane an angle α (Fig.2) smaller than 90° and greater than 0°, and their longitudinal section is conical, i.e. their diameter changes progressively starting from a minimum diameter "d" to reach a maximum diameter "D" (Fig.4).

This allows to achieve the above-mentioned advantages of greater dissipation surface, constant air flow through holes 2 favoured by the Venturi effect that their conical shape generates, and acute angle incidence over the pads.

Said advantages can be achieved without resorting to complicated structures or manufacturing processes, but merely by drilling the disc with a normal suitably shaped cutter arranged at an inclined position with respect to the disc plane and oriented in a substantially tangential direction.

The number of holes, their minimum diameter, the conicity angle, as well as their arrangement illustrated in the figures are obviously depicted for merely exemplificative purposes, and they can be freely changed according to the applications. In particular, it is preferable to alternate the direction of inclination of the holes along the disc so that on each side the number of holes passing over the relevant pad at an acute angle and those passing at an obtuse angle is substantially the same.

Similarly, also the conical shape of holes 2 is preferably alternated between the two sides so that on each side there is a substantially equal number of large ends (D) and small ends (d) of the holes. In any case, the large end (D) of the hole always precedes the small end (d) with respect to the direction of rotation of the disc (indicated by the arrows in Figs.1 and 3) so as to guarantee the Venturi effect generated by the reduction in the flow area of the air flow.

In this way a too different wearing of the pads between one side of the disc and the other is prevented, and there is also achieved a symmetrical aerodynamic behaviour since air flows through holes 2 both from the right side to the left side and vice versa.

It is even possible to prevent the effect of greater removal of material from the pads by making holes 2 with the cutter arranged still at an inclined position with respect to the disc plane but oriented in a substantially radial rather than tangential direction. In this case it is unnecessary to alternate the direction of inclination of the holes since the angle at which they pass over the pad is the same for all holes, yet it remains still preferable to alternate the conical shape between the two sides. By selecting any other orientation of the holes in a direction comprised between the tangential direction and the radial direction it is possible to determine a greater or smaller effect of pad material removal.

As to the amount of the inclination and conicity of holes 2, in the example illustrated in the figures they are respectively 45° and 12°, values that the inventor deems a good compromise between the increase in area of the lateral surface of the hole and the increase in area of the resulting elliptical end openings on the disc sides. Such values may obviously be changed at will depending on specific application needs.

It is therefore clear that the above-described and illustrated embodiment of the brake disc according to the invention is just an example susceptible of various modifications. For example, holes 2 can even have a cross-section that is not circular as long as the progressive change in section results in a substantial conicity, and obviously the disc can be made in any material such as typically steel, cast iron, carbon, etc.

## Claims

1. Brake disc consisting of a circular rim having an internal profile (1) contoured for mounting on a wheel hub and a plurality of through holes (2), **characterized in that** the axis of said holes (2) forms with the disc plane an angle (α) smaller than 90° and greater than 0°, preferably ranging from 25° to 65°, and said holes (2) have a substantially conical longitudinal section with a conicity angle ranging from 1° to 30°.

2. Brake disc according to claim 1, **characterized in that** the axis of the holes (2) is oriented in a direction substantially tangential to the disc.

3. Brake disc according to claim 2, **characterized in that** the direction of inclination of the holes (2) along the disc is alternated so that on each side of the disc the number of holes (2) passing over the relevant brake pad at an acute angle and those passing at an obtuse angle is substantially the same.

4. Brake disc according to one of claims 1 to 3, **characterized in that** the conical shape of the holes (2) along the disc is alternated so that on each side of the disc the number of holes (2) showing the end of maximum diameter (D) and those showing the end of minimum diameter (d) is substantially the same.

5. Brake disc according to one of claims 1 to 4, **characterized in that** the angle (α) of inclination of the holes (2) is 45°.

6. Brake disc according to one of claims 1 to 5, **characterized in that** the conicity of the holes (2) is 12°.
